# EUROPEAN PATENT SPECIFICATION

(11) **EP 2 210 007 B1**
(45) Date of publication and mention of the grant of the patent: **21.11.2012**
(21) Application number: 08836818.8
(22) Date of filing: 01.10.2008
(51) Int. Cl.: F16D 23/06, B60T 17/02, F16H 3/78

(54) **COUPLING APPARATUS AND PNEUMATIC SYSTEM**
KUPPLUNGSVORRICHTUNG UND PNEUMATIK
APPAREIL DE COUPLAGE ET SYSTÈME PNEUMATIQUE

(30) Priority: 12.10.2007 SE 0702289
(43) Date of publication of application: 28.07.2010
(73) Proprietor: Scania CV AB (publ), 151 87 Södertälje (SE)
(72) Inventor: DREXEL, Alexander, S-153 30 Järna (SE); SUNDBERG, Per, S-155 30 Nykvarn (SE)
(74) Representative: Waldebäck, Hans Olov
(86) International application number: PCT/SE2008/051108
(87) International publication number: WO 2009/048409

(56) References cited:
- EP-B1- 1 255 936
- WO-A1-96/20359
- US-A- 4 573 561
- US-A- 4 732 247
- US-A- 5 105 927
- US-A- 5 377 800

## Description

### FIELD OF THE INVENTION AND STATE OF THE ART

The present invention relates to a pneumatic system according to the preamble of claim 1.

The pneumatic system according to the invention comprises a compressor and a clutch device. The clutch device according to the present invention takes the form of a so-called synchromesh clutch of the type which comprises a synchronising element adapted to responding to an axial movement of a clutch means towards a driving element by blocking the axial movement of the clutch means and preventing the clutch means from being coupled for joint rotation with the driving element before synchronised rotation is achieved between the clutch means and the driving element.

A synchromesh clutch of the type indicated above is known from, for example, EP 1 255 936 B1, in which the clutch means is intended to be moved in an axial direction by a clutch fork which engages in an external recess in the clutch means.

Another synchromesh clutch for use in a 4-wheel drive vehicle drive transmission is described in US 5 377 800 A, describing a clutch sleeve that is actuated by a ring-like piston in a ring shaped chamber under the influence of hydraulic pressure and a spring.

A known practice from US 4 573 561 A is the connecting of an air compressor to a combustion engine of a vehicle via a friction clutch which comprises a number of mutually cooperating disc-shaped clutch plates. The friction clutch is controlled in such a way that the combustion engine is drivingly connected to the air compressor until such time as a desired pneumatic pressure is reached in the vehicle's compressed air container, whereupon the friction clutch responds to a pneumatic control signal by disengaging the air compressor from the combustion engine when it is detected that the desired pneumatic pressure has been reached in said compressed air container. The fact that the air compressor is thus run only when it is necessary to generate compressed air contributes to reduced fuel consumption of the vehicle and less wear on the air compressor as compared with cases where the combustion engine constantly remains drivingly connected to the air compressor. A disadvantage of the solution according to US 4 573 561 A is that the friction clutch used is relatively bulky.

### OBJECT OF THE INVENTION

The object of the present invention is to provide a further development of a pneumatic system for generating pressurized air in a braking system for a vehicle comprising a compressor and clutch device of the synchromesh type in order to achieve a structure which allows a relatively compact configuration of the clutch device and at the same time a functionally simple and reliable control of the linear movements of the axially movable clutch means of the clutch device.

### SUMMARY OF THE INVENTION

According to the present invention, said object is achieved by a pneumatic system having the features indicated in claim 1.

In the pneumatic system having a clutch device according to the invention, an annular piston means is thus used for controlling the axial linear position of the clutch means. The fact that the piston means is annular makes it possible for it to be arranged externally to, and surround at least part of, the clutch means, thus affording potential for a relatively compact configuration of the clutch device. At the same time, the position of the piston means and hence the axial linear position of the clutch means are easy to set pneumatically by regulating the fluid pressure in the pressure chamber which cooperates with the piston means. The clutch device according to the invention is intended for use in a vehicle, e.g. a truck, a tractor unit or a bus, to allow driving connection of the vehicle's combustion engine to an air compressor fitted in the vehicle and disengagement of the air compressor from the combustion engine.

According to an embodiment of the invention, the piston means surrounds a portion of the clutch means and is coupled with the clutch means via one or more carrier means which protrude radially inwards from the piston means, the respective carrier means being fastened to the piston means and slidably accommodated in an external groove running round the clutch means for transmission of axial force from the piston means to the clutch means. This makes it easy to transmit axial force from the piston means to the clutch means while at the same time the clutch means is allowed to rotate relative to the piston means.

Other advantageous embodiments of the pneumatic system according to the invention are indicated by the dependent claims and the description set out below.

According to an embodiment of the pneumatic system, the compressor is a piston compressor which has its cylinder head connectable to the surroundings via a pneumatic line and a valve arrangement, which valve arrangement comprises a valve means which is adapted:
- to being in an open position and thereby allowing compressed air to flow out from the cylinder head to the surroundings via the pneumatic line when the clutch means is in the disengagement position, and
- to being in a closed position and thereby preventing compressed air from flowing out from the cylinder head to the surroundings via the pneumatic line when the clutch means is in the engagement position.

The fact that the valve means allows compressed air to flow out from the cylinder head to the surroundings when the clutch means is in the disengagement position means that the synchronising element of the clutch device does not have to work against a retarding force caused by a counterpressure for the compressor's piston or pistons in the cylinder head during the synchronising process, thereby enabling rapid synchronisation and reducing the friction energy associated with the synchronisation.

According to a further embodiment of the pneumatic system, the valve arrangement is disposed in the clutch housing and comprises a regulating means arranged for movement relative to the clutch housing and for cooperation with the valve means and a control of the piston means for regulating the position of the valve means according to the axial linear position of the piston means. Thus the position of the valve means is directly coupled to the axial linear position of the piston means.

Other advantageous embodiments of the pneumatic system according to the invention are indicated by the dependent claims and the description set out below.

### BRIEF DESCRIPTION OF THE DRAWINGS

The invention is described in more detail below on the basis of embodiment examples with reference to the attached drawings, in which:
- Fig. 1: depicts a schematic perspective view of a compressor provided with a clutch device according to an embodiment of the present invention,
- Fig. 2: depicts a schematic exploded view of components of the clutch device according to Fig. 1,
- Fig. 3: depicts a schematic exploded view of further components of the clutch device according to Fig. 1,
- Fig. 4: depicts a schematic axial section through the clutch device according to Fig. 1, with a clutch means forming part of the clutch device and depicted in an engagement position,
- Fig. 5: depicts the section according to Fig. 4, with the clutch means depicted in a disengagement position,
- Figs. 6a-6c: depict schematic cutaway perspective views of components of a clutch device according to the present invention, illustrating various steps in a clutch process,
- Fig. 7: depicts a schematic illustration of a valve arrangement forming part of the clutch device according to Figs. 1-5,
- Fig. 8: depicts a side view of the valve arrangement, and
- Fig. 9: depicts a skeleton diagram of a pneumatic system according to an embodiment of the present invention.

### DETAILED DESCRIPTION OF PREFERRED EMBODIMENTS

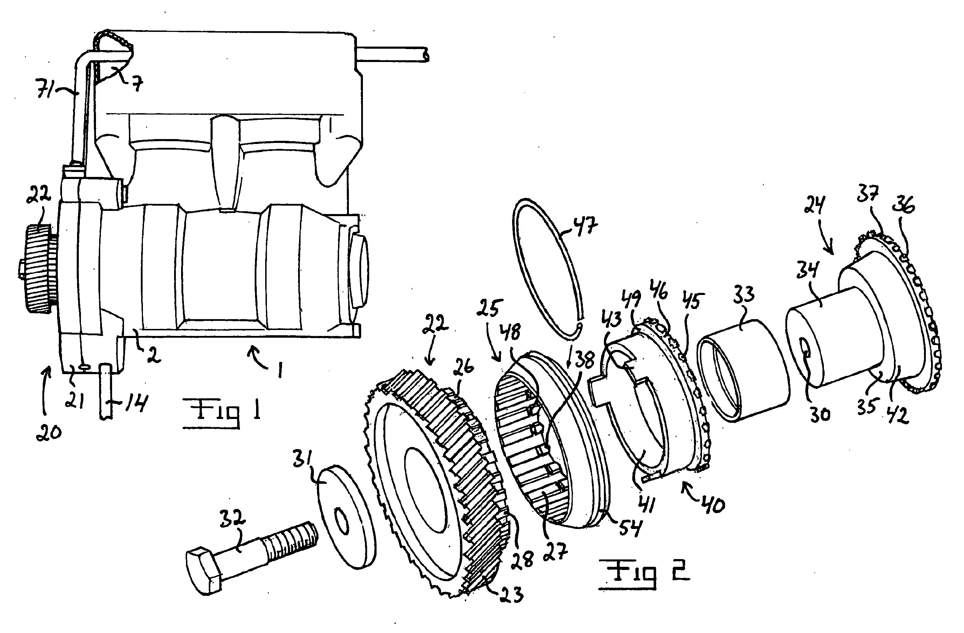

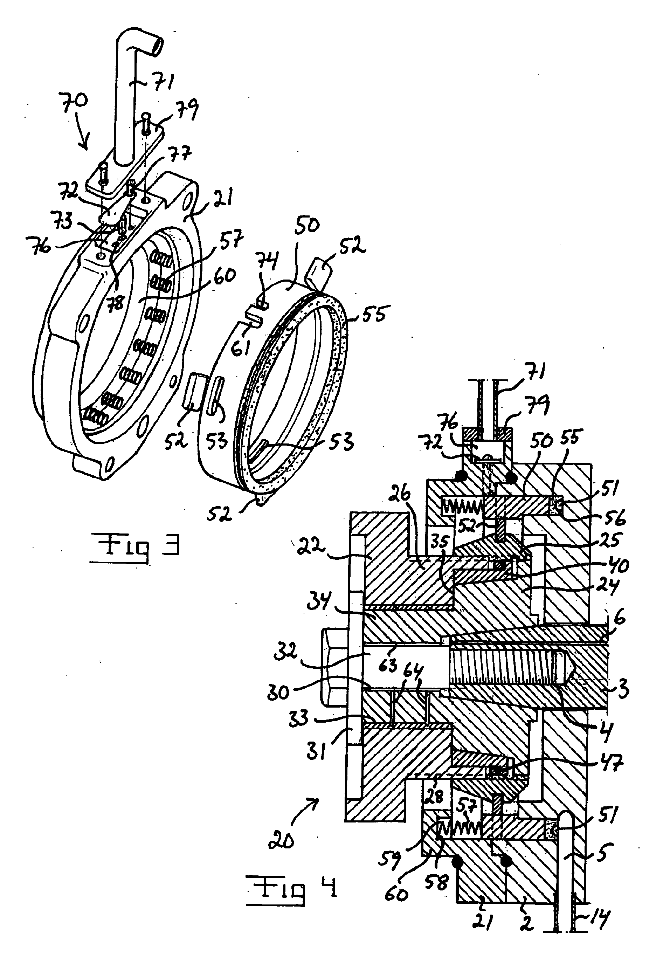

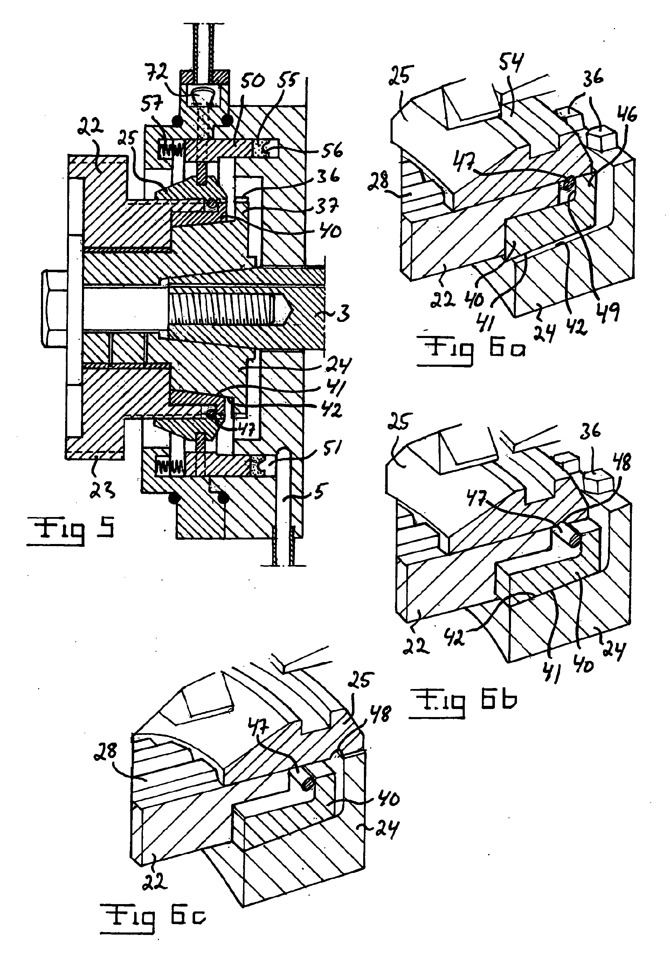

Fig. 1 illustrates a compressor 1 provided with a clutch device 20 according to an embodiment of the present invention. In the example illustrated, the compressor 1 is a piston compressor intended to generate compressed air for a brake system in a motor vehicle, e.g. a truck, a tractor unit or a bus. The exploded views according to Figs. 2 and 3 and the sectional views according to Figs. 4 and 5 illustrate various components of said clutch device 20.

The clutch device 20 comprises a clutch housing 21 fastened to the compressor's outer housing 2 by, for example, threaded connections. The clutch device 20 comprises a first driving element 22 arranged for rotation relative to the clutch housing 21 and intended to be driven in rotation by a prime mover, e.g. in the form of a combustion engine in cases where the compressor 1 is arranged or intended to be arranged in a motor vehicle. The first driving element 22 may for example be provided with external toothing 23, as illustrated in Fig. 2, for driving connection to a gearwheel driven by said prime mover.

The clutch device 20 further comprises a second driving element 24 arranged for rotation relative to the clutch housing 21, and an annular clutch means 25 adapted to allowing driving connection of the first driving element 22 to the second driving element 24 and disengagement of the first driving element 22 from the second driving element 24. The clutch means 25 is connected to, for joint rotation with, the first driving element 22 and is movable axially relative to the latter to and fro between a disengagement position (see Fig. 5) in which the clutch means 25 is rotatable relative to the second driving element 24, and an engagement position (see Fig. 4 ) in which the clutch means 25 is coupled to, for joint rotation with, the second driving element 24. In the example illustrated, the clutch means 25 is fastened to a cylindrical end portion 26 of the first driving element 22 via internal splines 27 on the clutch means which engage with external splines 28 on said end portion 26.

In the example illustrated, the second driving element 24 is connected to, for joint rotation with, the crankshaft 3 of the compressor 1, as illustrated in Figs. 4 and 5. The driving element 24 has running centrally through it a hole 30 which at its end facing towards the compressor is cone-shaped to accommodate a cone-shaped end portion of the crankshaft 3. The driving element 24 is clamped to, for joint rotation with, the cone-shaped end portion of the crankshaft 3 by a washer 31 which is pressed firmly against the outer end of the driving element 24 by a screw 32 which extends through the hole 30 in the drive element and is screwed firmly into a threaded recess 4 in the crankshaft 3.

The first driving element 22 is journalled for rotation via a bearing 33 relative to a cylindrical end portion 34 of the second driving element 24 and is held in place in the axial direction between the washer 31 and a shoulder 35 of the second driving element 24. The first driving element 22 can rotate freely relative to the second driving element 24 via the bearing 33 when the clutch means 25 is in the disengagement position.

The second driving element 24 is provided with external clutch teeth 36 arranged at mutual spacing on a radially protruding annular flange 37 of the second driving element. The clutch teeth 36 are distributed in the circumferential direction of the flange. The clutch means 25 is correspondingly provided with internal clutch teeth 38 arranged at mutual spacing at the end of the clutch means which points away from the first driving element 22. The clutch teeth 38 are distributed in the circumferential direction of the clutch means. When the clutch means 25 is in the engagement position, each clutch tooth 38 of the clutch means is accommodated between two clutch teeth 36 of the second driving element 24 in such a way that the clutch teeth 38 of the clutch means engage for joint rotation with the clutch teeth 36 of the second driving element 24. When the clutch means 25 is in the disengagement position, the clutch teeth 38 of the clutch means are moved axially out of engagement with the clutch teeth 36 of the second driving element 24 so that the clutch teeth 38 of the clutch means are free from the clutch teeth 36 of the second driving element. To facilitate mutual coupling of the clutch teeth 36, 38 upon movement of the clutch means 25 from the disengagement position to the engagement position, the clutch teeth 36 of the second driving element and the clutch teeth 38 of the clutch means are chamfered at their ends which face one another.

An annular synchronising element 40 is adapted to responding to movement of the clutch means 25 from the disengagement position towards the engagement position by blocking the axial movement of the clutch means and preventing the clutch means 25 from assuming the engagement position before synchronised rotation has been achieved between the clutch means 25 and the second driving element 24. The synchronising element 40 is provided with an internal conical friction surface 41 which abuts against an external conical friction surface 42 of the second driving element 24. The synchronising element 40 is coupled with the clutch means 25 in such a way that when the clutch means is in the disengagement position, it is rotatable relative to the clutch means within a limited angle of rotation to and fro between a blocking position (see Fig. 6a) in which the synchronising element 40 is adapted to preventing the clutch means 25 from moving to the engagement position, and a non-blocking position (see Figs. 6b and 6c) in which the synchronising element 40 is adapted to allowing the clutch means 25 to move to the engagement position. To allow this limited rotatability between the synchronising element 40 and the clutch means 25, the synchronising element is provided, at its end pointing towards the first driving element 22, with axial protrusions 43 (see Fig. 2) each accommodated in a recess (not depicted) in the end portion 26 of the first driving element, each recess 43 being somewhat shorter in length than the corresponding recess as viewed in the direction of rotation of the synchronising element. The synchronising element 40 is provided with radially protruding stop means 45 adapted to cooperating with the clutch teeth 38 on the clutch means 25 in order to effect said blocking of the axial movement of the clutch means. The stop means 45 are arranged at mutual spacing on a radially protruding annular flange 46 of the synchronising element 40 and are distributed in the circumferential direction of the flange. Each stop means 45 is chamfered at its end which faces towards the first driving element 22 so that the chamfered ends of the clutch teeth 38 of the clutch means come into contact with the chamfered ends of the stop means 45 when the clutch means moves from the disengagement position towards the engagement position.

At the beginning of the linear movement from the disengagement position towards the engagement position, the clutch means 25 is adapted to transmitting axial force to the synchronising element 40 via a resilient force transmission means in the form of a radially compressible wire spring 47. This wire spring 47 is arranged in a space between the clutch means 25 and the synchronising element 40. When the clutch means 25 is in the disengagement position, the wire spring 47 is accommodated in an internal groove 48 running round the clutch means 25. When the clutch means 25 moves from the disengagement position towards the engagement position, the wire spring 47 will, through its engagement in the groove 48, accompany the clutch means 25 so that the wire spring is pressed by the action of the clutch means against a shoulder 49 of the synchronising element 40 which forms part of the aforesaid flange 46, as illustrated in Fig. 6a. The wire spring 47 is thus caused to transmit axial force from the clutch means 25 to the synchronising element 40 so that the friction surface 41 of the synchronising element is thereby pressed against the corresponding friction surface 42 of the second driving element 24. The friction between the friction surfaces 41, 42 has the effect of causing the synchronising element 40 to rotate relative to the clutch means 25 so that the synchronising element assumes the aforesaid blocking position relative to the clutch means, with the stop means 45 on the synchronising element abutting against the clutch teeth 38 on the clutch means 25 and braking a continued axial movement of the clutch means towards the engagement position. Progressively as the clutch means 25 moves further towards the engagement position, i.e. to the right in Fig. 6a, the friction surfaces 41, 42 are pressed ever harder against one another, while the friction force between the friction surfaces 41, 42 causes the second driving element 24 to accompany the synchronising element 40 in rotation until the second driving element 24 is caused to rotate at the same or at least substantially the same speed as the clutch means 25 and hence at the same or at least substantially the same speed as the first driving element 22. The axial force of the clutch means and the guidance by the chamfered ends of the clutch teeth 38 and the stop means 45 will cause the synchronising element 40 to rotate relative to the clutch means 25 so that the clutch teeth 38 can finally be pressed in through the apertures between the stop means 45. During this continued axial movement of the clutch means 25, the wire spring 47 is pressed out from the groove 48 of the clutch means 25, after which the clutch means 25 is free to move further forwards so that its clutch teeth 38 are pressed into the apertures between the clutch teeth 36 of the second driving element 24 during the establishment of joint rotary engagement between the clutch means 25 and the second driving element 24, as illustrated in Fig. 6c. The wire spring 47 is so dimensioned that the clutch teeth 38 of the clutch means are only allowed to pass the stop means 45 when the clutch means 25 and the wire spring 47 have caused the synchronising element 40 to be pressed so hard against the second driving element 24 that the latter is caused to assume the same or at least substantially the same speed of rotation as the clutch means 25, i.e. only after the desired synchronisation of the speeds of rotation of the two driving elements 22, 24 has been achieved.

The wire spring 47 might alternatively be replaced by resilient force transfer means of some other type which is conventional in synchromesh clutches.

The clutch device 20 comprises an annular piston means 50 which is movable axially relative to the clutch housing 21 under the action of the fluid pressure in an annular pressure chamber 51 which cooperates with the piston means 50. The clutch means 25 is coupled to the piston means 50 in such a way that it is rotatable relative to the piston means and adapted to accompanying the piston means during axial movement of the piston means. In the example illustrated, the piston means 50 is adapted to surrounding a portion of the clutch means 25 and is coupled to the clutch means via three carrier means 52 which are arranged at spacing from one another in the circumferential direction of the piston means and protrude radially inwards from the piston means. The number of carrier means might of course be both more and fewer than three. Each carrier means 52 is fastened to the piston means 50 in such a way that it accompanies the piston means in the latter's axial movement to and fro relative to the clutch housing 21. In the example illustrated, each carrier means 52 is fitted in a recess 53 in the piston means 50 and slidably accommodated in an external groove 54 running round the clutch means 25 for transmitting axial force from the piston means to the clutch means. A seal ring 55 is with advantage fastened to the end of the piston means 50 which faces towards the pressure chamber 51, e.g. by vulcanisation, to seal the pressure chamber 51 from the surroundings. An annular recess 56 is arranged in the rear surface of the seal ring 55 to ensure that the seal ring is pressed against the walls of the pressure chamber 51 when the piston means 50 is subjected to a fluid pressure built up in the pressure chamber 51. The piston means 50 is movable axially by the action of the fluid pressure in the pressure chamber 51 and against the action of the spring force from a number of spring means 57 in a first direction (to the left in Figs. 4 and 5) to move the clutch means 25 from the engagement position toward the disengagement position. The piston means 50 is also movable in the opposite direction (to the right in Figs. 4 and 5) under the action of the spring force from said spring means 57 to move the clutch means 25 from the disengagement position towards the engagement position. In the example illustrated, said spring means 57 take the form of a plurality of compression springs, e.g. in the form of coil springs, arranged at spacing from one another in the circumferential direction of the piston means, each spring means 57 being clamped between the piston means 50 and a shoulder 58 of the clutch housing 21. The respective shoulder 58 takes the form with advantage of the bottom surface of a recess 59 arranged in a flange 60 of the clutch housing 21.

In the example illustrated, the pressure chamber 51 is formed in the compressor housing 2 and adapted to being pressurised via a duct 5 extending through the compressor housing.

In the embodiment illustrated, the lubricating oil required for the clutch device 20 is supplied via an oil duct 6 which extends through the compressor's crankshaft 3 to the outer end of the crankshaft. From the end of the oil duct 6, the lubricating oil is led on to the contact surface between the bearing 33 and the second driving element 24 via a gap 63 between the screw 32 and the cylindrical end portion 34 and oil ducts 64 extending radially through said end portion 34. The lubricating oil is thereafter led on to the friction surfaces 41, 42 between the second driving element 24 and the synchronising element 40.

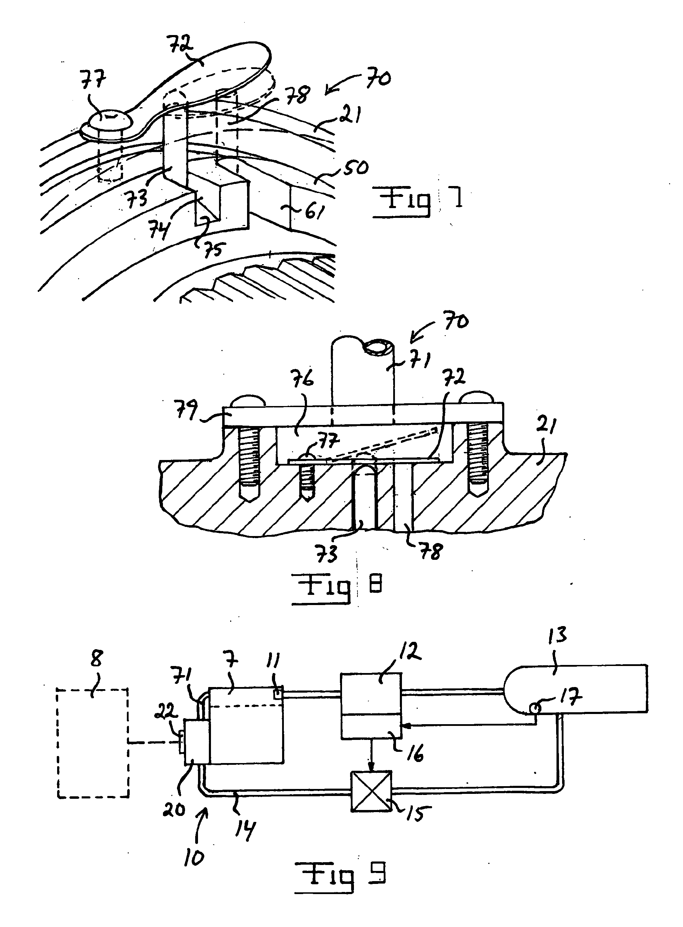

In cases where the clutch device 20 is adapted to cooperating with a compressor 1 in the form of a piston compressor, the clutch device 20 comprises with advantage a valve arrangement 70 connected to the cylinder head 7 of the compressor via a pneumatic line 71. The valve arrangement 70 comprises the valve means 72 adapted to being in an open position and thereby allowing compressed air to flow out from the cylinder head 7 to the surroundings via the pneumatic line 71 when the clutch means 25 is in the disengagement position, and to being in a closed position and thereby preventing compressed air from flowing out from the cylinder head 7 to the surroundings via the pneumatic line 71 when the clutch means 25 is in the engagement position. The open position of the valve means is represented by a continuous line in Fig. 7 and a broken line in Fig. 8 and its closed position by a broken line in Fig. 7 and a continuous line in Fig. 8. The valve arrangement 70 is arranged in the clutch housing 21 and comprises a regulating means 73 arranged for movement relative to the clutch housing in the form of a stem adapted to cooperating with the valve means 72 and a control 74 of the piston means 50 to regulate the position of the valve means 72 according to the axial linear position of the piston means. The control 74 comprises with advantage an external axially sloping control surface 75 of the piston means 50, as illustrated in Fig. 7, whereby the regulating means 73 has its one end abutting against the control surface 75 and its other end abutting against the valve means 72. Under the action of the control surface 75, the regulating means 73 is movable in its longitudinal direction towards the valve means 72 to switch the valve means from closed to open, and under the action of the valve means 72 the regulating means 73 is movable in its longitudinal direction away from the valve means 72 to allow the valve means to switch from open to closed. The valve means 72 takes with advantage the form of a plate made of resilient material, preferably spring steel, clamped in a valve chamber 76 in the clutch housing 21, e.g. by a screw 77, in such a way that it is preloaded to assume a closed position during closure of the inlet aperture of an air duct 78 which extends through the clutch housing and communicates with the surroundings via a recess 61 in the piston means 50. In the open position, the valve means 72 is lifted from the inlet aperture of the air duct 78 so that air is allowed to pass from the valve chamber 76 and proceed to the surroundings via the air duct 78. In the closed position, a pneumatic pressure built up in the valve chamber 76 helps to press the valve means 72 towards the inlet aperture of the air duct 78 so that a sealing abutment of the valve means against said inlet aperture is effected. Said pneumatic pressure in the valve chamber 76 is due to the pistons of the compressor 1 pressurising air in the cylinder head 7. In the example illustrated the valve chamber 76 is closed by a cover 79 sealingly clamped to the clutch housing 21, e.g. by threaded connections.

The clutch device 20 according to the invention is particularly suited to forming part of a pneumatic system of a motor vehicle to allow driving connection of the vehicle's combustion engine to a crankshaft of an air compressor fitted in the vehicle, and disengagement of the crankshaft of the air compressor from the combustion engine. A conceivable embodiment of such a pneumatic system 10 is illustrated schematically in Fig. 9. In this case the first driving element 22 of the clutch device 20 is connected to the combustion engine 8 in order to be driven in rotation by the combustion engine, while the second driving element 24 of the clutch device is connected to the crankshaft of the compressor 1. The cylinder head 7 of the compressor is connected via a check valve 11 and an air dryer 12 to one or more compressed air containers 13 to generate compressed air in the respective compressed air containers 13. The cylinder head 7 of the compressor is also connected via a pneumatic line 71 to the previously described the valve arrangement 70 of the clutch device 20. The aforesaid pressure chamber 51 of the clutch device 20 is connected to the compressed air container 13 via a pneumatic line 14 in which a regulating valve 15 is arranged. The regulating valve 15 is controllable by an electronic control unit 16 to and fro between a closed position in which the pneumatic connection between the compressed air container 13 and the pressure chamber 51 is broken, and an open position in which the pressure chamber 51 is in pneumatic connection with the compressed air container 13. The control unit 16 is adapted to receiving a measurement signal from a pressure sensor 17 adapted to detecting the pressure in the compressed air container 13. When the clutch means 25 of the clutch device is in the engagement position, the compressor 1 is driven by the combustion engine 8 and thus generates pressurised air to the compressed air container 13. At this stage the valve means 72 of the valve arrangement 70 of the clutch device and the regulating valve 15 are kept closed. When the control unit 16 detects that the pressure in the compressed air container 13 has reached a given value, the control unit 16 emits a control signal to the regulating valve 15 so that the regulating valve is caused to switch from closed to open, whereby the pressurised air in the compressed air container 13 generates via the line 14 a pressure in the pressure chamber 51 of the clutch device so that the piston means 50 moves axially against the action of the spring means 57. This movement of the piston means 50 moves the clutch means 25 from the engagement position to the disengagement position so that the running of the compressor 1 ceases while at the same time the valve means 72 of the valve arrangement 70 of the clutch device under the action of the regulating means 73 switches from closed to open so that the pneumatic pressure in the cylinder head 7 is equalised. When the control unit 16 thereafter detects that the pressure in the compressed air container 13 has dropped below a given value, the control unit 16 emits a control signal to the regulating valve 15 so that the regulating valve is caused to switch from open to closed, whereupon the pressure in the pressure chamber 51 drops so that the piston means 50 moves axially under the action of the spring means 57. This movement of the piston means 50 moves the clutch means 25 from the disengagement position towards the engagement position during synchronisation of the speeds of rotation of the driving elements 22, 24 of the clutch device. When synchronisation has been achieved, the clutch means 25 assumes the engagement position so that the compressor 1 is again caused to be driven by the combustion engine 8 while at the same time the valve means 72 of the valve arrangement 70 of the clutch device switches from open to closed.

## Claims

1. A pneumatic system for generating pressurized air in a braking system for a vehicle comprising a compressor (1) and a clutch device which is adapted to allowing driving connection of a crankshaft (3) of the compressor (1) to a prime mover and disengagement of the crankshaft (3) from the prime mover,
wherein the clutch device comprises
- a clutch housing (21),
- a first driving element (22) rotatable relative to the clutch housing (21),
- a second driving element (24) rotatable relative to the clutch housing (21),
- a clutch means (25) adapted to allowing driving connection of the first driving element (22) to the second driving element (24) and disengagement of the first driving element (22) from the second driving element (24), which clutch means (25) is connected to, for joint rotation with, the first driving element (22) and is movable axially relative to the latter to and fro between a disengagement position in which the clutch means (25) is rotatable relative to the second driving element (24), and an engagement position in which the clutch means (25) is coupled for joint rotation with the second driving element (24),
wherein the clutch device (20) comprises an annular piston means (50) which is movable
axially relative to the clutch housing (21) under the action of the fluid pressure in a pressure chamber (51) which cooperates with the piston means, the clutch means (25) being coupled to the piston means (50) in such a way that it is rotatable relative to the piston means (50) and adapted to accompanying the piston means (50) in axial movement thereof.
**characterised in that** the clutch device comprises
- a synchronising element (40) adapted to responding to movement of the clutch means (25) from the disengagement position towards the engagement position by blocking the axial movement of the clutch means and preventing the clutch means from assuming the engagement position before synchronised rotation is achieved between the clutch means (25) and the second driving element (24).

2. A pneumatic system according to claim 1, **characterised in that** the piston means (50) is movable axially in a first direction under the action of the fluid pressure in said pressure chamber (51) and in the opposite direction under the action of one of more spring means (57).

3. A pneumatic system according to claim 1 or 2, **characterised in that** the piston means (50) surrounds a portion of the clutch means (25) and is coupled to the clutch means (25) via one or more carrier means (52) which protrude radially inwards from the piston means, each carrier means (52) being fastened to the piston means (50) and slidably accommodated in an external groove (54) running round the clutch means (25) to transmit axial force from the piston means to the clutch means.

4. A pneumatic system according to any one of claims 1-3, **characterised in that** the synchronising element (40) is provided with an internal conical friction surface (41) adapted to cooperating with an external conical friction surface (42) of the second driving element (24).

5. A pneumatic system according to any one of claims 1-4, **characterised in that** the synchronising element (40) is coupled to the clutch means (25) in such a way that it is rotatable relative to the clutch means within a limited angle of rotation to and fro between a blocking position in which the synchronising element (40) is adapted to preventing the clutch means (25) from moving to the engagement position, and a non-blocking position in which the synchronising element (40) is adapted to allowing the clutch means (25) to move to the engagement position.

6. A pneumatic system according to claim 5, **characterised in that** the synchronising element (40) is provided with radially protruding stop means (45) adapted to cooperating with clutch teeth (38) on the clutch means (25) for effecting said blocking of the axial movement of the clutch means.

7. A pneumatic system according to claim 6, **characterised in that** the second driving element (24) is provided with clutch teeth (36) adapted to engaging for joint rotation with the clutch teeth (38) of the clutch means (25) when the clutch means is in the engagement position.

8. A pneumatic system according to any one of claims 1-7, **characterised:**
- **in that** the clutch device (20) comprises a radially compressible wire spring (47) which, when the clutch means (25) is in the disengagement position, is accommodated in an internal groove (48) running round the clutch means (25), and
- that the wire spring (47) is adapted to responding to movement of the clutch means (25) from the disengagement position towards the engagement position by being pressed against a shoulder (49) of the synchronisation element (40) to transmit axial force from the clutch means (25) to the synchronisation element (40) so that a friction surface (41) of the synchronising element is thereby pressed against a corresponding friction surface (42) of the second driving element (24), the wire spring (47) being adapted to being pressed out of said internal groove (48) running round the clutch means (25) when the clutch means (25) assumes the engagement position.

9. A pneumatic system according to claim 1, in which the compressor (1) is a piston compressor and comprises a cylinder head (7), **characterised in that** the cylinder head (7) of the compressor (1) is connectable to the surroundings via a pneumatic line (71) and a valve arrangement (70), which valve arrangement (70) comprises a valve means (72) which is adapted:
- to being in an open position and thereby allowing compressed air to flow out from the cylinder head (7) to the surroundings via the pneumatic line (71) when the clutch means (25) is in the disengagement position, and
- to being in a closed position and thereby preventing pressurised air from flowing out from the cylinder head (7) to the surroundings via the pneumatic line (71) when the clutch means (25) is in the engagement position.

10. A pneumatic system according to claim 9, **characterised in that** the valve arrangement (70) is arranged in the clutch housing (21) and comprises a regulating means (73) arranged for movement relative to the clutch housing and for cooperation with the valve means (72) and a control (74) of the piston means (50) to regulate the position of the valve means (72) according to the axial linear position of the piston means.

11. A pneumatic system according to claim 10, **characterised in that** the control (74) comprises an external axially sloping control surface (75) of the piston means (50).

12. A pneumatic system according to claim 11, **characterised in that** the regulating means (73) takes the form of a stem which has its one end abutting against said control surface (75) and its other end abutting against the valve means (72), the regulating means (73) under the action of the control surface (75) being movable in its longitudinal direction towards the valve means (72) to switch the valve means from closed to open, and under the action of the valve means (72) being movable in its longitudinal direction away from the valve means to allow the valve means to switch from open to closed.

13. A pneumatic system according to claim 12, **characterised in that** the valve means (72) takes the form of a plate made of resilient material clamped in the clutch housing (21).

## Patentansprüche

1. Pneumatiksystem zum Erzeugen von Druckluft in einem Fahrzeugbremssystem, welches einen Kompressor (1) umfasst und eine Kupplungsvorrichtung, die dazu eingerichtet ist, eine Triebverbindung einer Kurbelwelle (3) des Kompressors (1) zu einem Antriebsaggregat und ein Abkoppeln der Kurbelwelle (3) vom Antriebsaggregat zu ermöglichen, wobei die Kupplungsvorrichtung folgendes umfasst:
- ein Kupplungsgehäuse (21),
- ein erstes Antriebselement (22), welches relativ zum Kupplungsgehäuse (21) rotierbar ist,
- ein zweites Antriebselement (24), welches relativ zum Kupplungsgehäuse (21) rotierbar ist,
- ein Kupplungsmittel (25), dazu eingerichtet, um eine Triebverbindung des ersten Antriebselements (22) zum zweiten Antriebselement (24) und ein Abkoppeln des ersten Antriebselements (22) vom zweiten Antriebselement (24) zu ermöglichen, wobei das Kupplungsmittel (25) zwecks gemeinsamer Rotation mit dem ersten Antriebselement (22) verbunden ist und relativ zu Letzterem axial zwischen einer abgekoppelten Position, bei der das Kupplungsmittel (25) relativ zum zweiten Antriebselement (24) rotierbar ist, und einer Kupplungsposition, bei der das Kupplungsmittel (25) zwecks gemeinsamer Rotation mit dem zweiten Antriebselement (24) gekoppelt ist, hin und her bewegbar ist, wobei die Kupplungsvorrichtung (20) ein ringförmiges Kolbenmittel (50) umfasst, welches relativ zum Kupplungsgehäuse (21) durch die Wirkung eines Fluiddruckes in einer Druckkammer (51), welche mit dem Kolbenmittel zusammenwirkt, axial bewegbar ist und wobei das Kupplungsmittel (25) am Kolbenmittel (50) derart angekoppelt ist, dass es relativ zum Kolbenmittel (50) rotierbar ist und dazu eingerichtet ist, sich einer axialen Bewegung des Kolbenmittels (50) anzuschließen,
**dadurch gekennzeichnet, dass** die Kupplungsvorrichtung folgendes umfasst:
- ein Synchronisierelement (40), das dazu eingerichtet ist, auf die Bewegung des Kupplungsmittels (25) von der abgekoppelten Position zur Kupplungsposition zu reagieren, indem es die axiale Bewegung des Kupplungsmittels blockiert und verhindert, dass das Kupplungsmittel die Kupplungsposition einnimmt, bevor eine synchronisierte Rotation zwischen Kupplungsmittel (25) und zweitem Antriebselement (24) erreicht ist.

2. Pneumatiksystem nach Anspruch 1,
**dadurch gekennzeichnet, dass** das Kolbenmittel (50) durch die Wirkung eines Fluiddrucks in der Druckkammer (51) in eine erste Richtung und in die Gegenrichtung durch die Wirkung von einem oder mehreren Federmitteln (57) axial bewegbar ist.

3. Pneumatiksystem nach Anspruch 1 oder 2,
**dadurch gekennzeichnet, dass** das Kolbenmittel (50) einen Teil des Kupplungsmittels (25) umgibt und an das Kupplungsmittel (25) mittels einem oder mehrerer Trägermittel (52) gekoppelt ist, die radial nach innen vom Kolbenmittel hervorstehen, wobei jedes Trägermittel (52) am Kolbenmittel (50) befestigt ist und verschieblich in einer äußeren Nut (54) aufgenommen ist, die das Kupplungsmittel (25) umläuft, um axiale Kräfte vom Kolbenmittel zum Kupplungsmittel zu übertragen.

4. Pneumatiksystem nach einem der Ansprüche 1 bis 3,
**dadurch gekennzeichnet, dass** das Synchronisierelement (40) mit einer inneren konischen Reibungsfläche (41) versehen ist, die dazu eingerichtet ist, mit einer äußeren konischen Reibungsfläche (42) des zweiten Antriebselements (24) zusammenzuwirken.

5. Pneumatiksystem nach einem der Ansprüche 1 bis 4,
**dadurch gekennzeichnet, dass** das Synchronisierelement (40) derart an das Kupplungsmittel (25) gekoppelt ist, dass es relativ zum Kupplungsmittel innerhalb eines begrenzten Rotationswinkels zwischen einer blockierenden Position, in der das Synchronisierelement (40) dazu eingerichtet ist, zu verhindern, dass das Kupplungsmittel (25) sich zur Kupplungsposition bewegt, und einer nicht blockierenden Position, in der das Synchronisierelement (40) dazu eingerichtet ist, eine Bewegung des Kupplungsmittels (25) zur Kupplungsposition zuzulassen, hin und her rotierbar ist.

6. Pneumatiksystem nach Anspruch 5,
**dadurch gekennzeichnet, dass** am Synchronisierelement (40) radial hervorstehende Anschlagmittel (45) vorgesehen sind, die dazu eingerichtet sind, mit den Kupplungszähnen (38) auf dem Kupplungsmittel (25) zusammenzuwirken, um das Blockieren der axialen Bewegung des Kupplungsmittels zu bewirken.

7. Pneumatiksystem nach Anspruch 6,
**dadurch gekennzeichnet, dass** am zweiten Antriebselement (24) Kupplungszähne (36) vorgesehen sind, die dazu eingerichtet sind, zwecks einer gemeinsamen Rotation mit den Kupplungszähnen (38) des Kupplungsmittels (25) in Eingriff zu kommen, wenn sich das Kupplungsmittel in der Kupplungsposition befindet.

8. Pneumatiksystem nach einem der Ansprüche 1 bis 7,
**dadurch gekennzeichnet, dass**:
- die Kupplungsvorrichtung (20) eine radial zusammendrückbare Drahtfeder (47) umfasst, die, wenn sich das Kupplungsmittel (25) in der abgekoppelten Position befindet, in einer inneren Nut (48) aufgenommen ist, die das Kupplungsmittel (25) umläuft, und
- die Drahtfeder (47) dazu eingerichtet ist, auf eine Bewegung des Kupplungsmittels (25) von der abgekoppelten Position zur Kupplungsposition zu reagieren, indem sie gegen eine Schulter (49) des Synchronisierelements (40) gedrückt wird, um axiale Kraft vom Kupplungsmittel (25) zum Synchronisierelement (40) zu übertragen, so dass eine Reibfläche (41) des Synchronisierelements dadurch gegen eine korrespondierende Reibfläche (42) des zweiten Antriebselements (24) gedrückt wird, wobei die Drahtfeder (47) dazu eingerichtet ist, aus der inneren Nut (48), die das Kupplungsmittel (25) umläuft, gedrückt zu werden, wenn das Kupplungsmittel (25) die Kupplungsposition einnimmt.

9. Pneumatiksystem nach Anspruch 1,
wobei der Kompressor (1) ein Kolbenkompressor ist und einen Zylinderkopf (7) umfasst, **gekennzeichnet dadurch, dass** der Zylinderkopf (7) des Kompressors (1) mittels einer pneumatischen Leitung (71) und einer Ventilanordnung (70) an die Umgebung anschließbar ist, wobei die Ventilanordnung (70) ein Ventilmittel (72) umfasst, welches dazu eingerichtet ist:
- eine offene Stellung einzunehmen und dadurch das Strömen von verdichteter Luft aus dem Zylinderkopf (7) in die Umgebung mittels der pneumatischen Leitung (71) zu ermöglichen, wenn das Kupplungsmittel (25) in der abgekoppelten Position ist, und
- eine geschlossene Stellung einzunehmen und dadurch zu verhindern, dass verdichtete Luft aus dem Zylinderkopf (7) mittels der pneumatischen Leitung (71) in die Umgebung strömt, wenn das Kupplungsmittel (25) in der Kupplungsposition ist.

10. Pneumatiksystem nach Anspruch 9,
**dadurch gekennzeichnet, dass** die Ventilanordnung (70) im Kupplungsgehäuse (21) angeordnet ist und ein Regulierungsmittel (73) umfasst, das derart angeordnet ist, dass es sich relativ zum Kupplungsgehäuse bewegen kann und mit dem Ventilmittel (72) zusammenwirken kann, und eine Steuerung (74) der Kolbenmittel (50), um die Position der Ventilmittel (72) entsprechend der axialen linearen Position der Kolbenmittel zu regulieren.

11. Pneumatiksystem nach Anspruch 10, **dadurch gekennzeichnet, dass** die Steuerung (74) eine äußere, sich axial neigende Steuerungsfläche (75) des Kolbenmittels (50) umfasst.

12. Pneumatiksystem nach Anspruch 11,
**dadurch gekennzeichnet, dass** das Regulierungsmittel (73) als Bolzen geformt ist, der mit seinem einen Ende an die Steuerungsfläche (75) angrenzt und mit dem anderen Ende an das Ventilmittel (72) angrenzt, wobei das Regulierungsmittel (73) durch die Wirkung der Steuerungsfläche (75) entlang seiner Längsrichtung bewegbar in Richtung des Ventilmittels (72) ist, um das Ventilmittel von geschlossen zu geöffnet zu schalten, und durch die Wirkung des Ventilmittels (72) entlang seiner Längsrichtung vom Ventilmittel weg bewegbar ist, um zu ermöglichen, dass das Ventilmittel von geöffnet zu geschlossen schaltet.

13. Pneumatiksystem nach Anspruch 12,
**dadurch gekennzeichnet, dass** das Ventilmittel (72) als Platte geformt ist, die aus einem elastischen Material hergestellt ist und im Kupplungsgehäuse (21) eingeklemmt ist.

## Revendications

1. Système pneumatique pour générer de l'air comprimé dans un système de freinage pour un véhicule, comprenant un compresseur (1) et un dispositif d'embrayage qui est adapté de façon à permettre la liaison d'entraînement d'un vilebrequin (3) du compresseur (1) avec un moteur et le désengagement du vilebrequin (3) à partir du moteur,
dans lequel le dispositif d'embrayage comprend :
- un boîtier d'embrayage (21),
- un premier élément d'entraînement (22) pouvant tourner par rapport au boîtier d'embrayage (21),
- un deuxième élément d'entraînement (24) pouvant tourner par rapport au boîtier d'embrayage (21),
- des moyens formant embrayage (25) adaptés de façon à permettre une liaison d'entraînement du premier élément d'entraînement (22) au deuxième élément d'entraînement (24) et un désengagement du premier élément d'entraînement (22) vis-à-vis du deuxième élément d'entraînement (24), ces moyens formant embrayage (25) étant reliés, pour une rotation conjointe avec celui-ci, au premier élément d'entraînement (22), et pouvant se déplacer axialement par rapport à ce dernier en va-et-vient entre une position de désengagement dans laquelle les moyens formant embrayage (25) peuvent tourner par rapport au deuxième élément d'entraînement (24), et une position de prise dans laquelle les moyens formant embrayage (25) sont couplés pour une rotation conjointe avec le deuxième élément d'entraînement (24), dans lequel le dispositif d'embrayage (20) comprend des moyens formant piston annulaire (50) qui peuvent se déplacer axialement par rapport au boîtier d'embrayage (21) sous l'action de la pression de fluide dans une chambre de pression (51) qui coopère avec les moyens formant piston, les moyens formant embrayage (25) étant couplés aux moyens formant piston (50) de telle sorte qu'ils puissent tourner par rapport aux moyens formant piston (50) et étant adaptés de façon à accompagner les moyens formant piston (50) dans un mouvement axial de ceux-ci,
**caractérisé en ce que** le dispositif d'embrayage comprend :
- un élément de synchronisation (40) adapté de façon à répondre au mouvement des moyens formant embrayage (25) de la position de désengagement à la position de prise en bloquant le mouvement axial des moyens formant embrayage et en empêchant les moyens formant embrayage de prendre la position de prise avant qu'une rotation synchronisée ne soit réalisée entre les moyens formant embrayage (25) et le deuxième élément d'entraînement (24).

2. Système pneumatique selon la revendication 1, **caractérisé en ce que** les moyens formant piston (50) peuvent se déplacer axialement dans une première direction sous l'action de la pression de fluide dans ladite chambre de pression (51) et dans la direction opposée sous l'action d'un ou de plusieurs moyens formant ressort (57).

3. Système pneumatique selon la revendication 1 ou 2, **caractérisé en ce que** les moyens formant piston (50) entourent une partie des moyens formant embrayage (25) et sont couplées aux moyens formant embrayage (25) par l'intermédiaire d'un ou de plusieurs moyens formant porteur (52) qui font saillie radialement vers l'intérieur à partir des moyens formant piston, chacun des moyens formant porteur (52) étant fixés aux moyens formant piston (50) et reçus de façon coulissante dans une rainure externe (54) s'étendant autour des moyens formant embrayage (25) de façon à transmettre une force axiale des moyens formant piston aux moyens formant embrayage.

4. Système pneumatique selon l'une quelconque des revendications 1 à 3, **caractérisé en ce que** l'élément de synchronisation (40) est muni d'une surface de frottement conique interne (41) adaptée de façon à coopérer avec une surface de frottement conique externe (42) du deuxième élément d'entraînement (24).

5. Système pneumatique selon l'une quelconque des revendications 1 à 4, **caractérisé en ce que** l'élément de synchronisation (40) est couplé aux moyens formant embrayage (25) de telle sorte qu'il puisse tourner par rapport aux moyens formant embrayage à l'intérieur d'un angle de rotation limité en va-et-vient entre une position de blocage dans laquelle l'élément de synchronisation (40) est adapté de façon à empêcher les moyens formant embrayage (25) de se déplacer vers la position de prise, et une position de non-blocage dans laquelle l'élément de synchronisation (40) est adapté de façon à permettre aux moyens formant embrayage (25) de se déplacer vers la position de prise.

6. Système pneumatique selon la revendication 5, **caractérisé en ce que** l'élément de synchronisation (40) est muni de moyens d'arrêt faisant saillie radialement (45) adaptés de façon à coopérer avec des dents d'embrayage (38) sur les moyens formant embrayage (25) de façon à effectuer ledit blocage du mouvement axial des moyens formant embrayage.

7. Système pneumatique selon la revendication 6, **caractérisé en ce que** le deuxième élément d'entraînement (24) est muni de dents d'embrayage (36) adaptées de façon à venir en prise pour une rotation conjointe avec les dents d'embrayage (38) des moyens formant embrayage (25) lorsque les moyens formant embrayage sont dans la position de prise.

8. Système pneumatique selon l'une quelconque des revendications 1 à 7, **caractérisé :**
- **en ce que** le dispositif d'embrayage (20) comprend un ressort à fil radialement compressible (47), qui, lorsque les moyens formant embrayage (25) sont dans la position de désengagement, est reçu dans une rainure interne (48) s'étendant autour des moyens formant embrayage (25), et
- **en ce que** le ressort à fil (47) est adapté de façon à répondre à un mouvement des moyens formant embrayage (25) de la position de désengagement à la position de prise en étant pressé contre un épaulement (49) de l'élément de synchronisation (40) de façon à transmettre une force axiale des moyens formant embrayage (25) à l'élément de synchronisation (40), de telle sorte qu'une surface de frottement (41) de l'élément de synchronisation soit par conséquent pressée contre une surface de frottement correspondante (42) du deuxième élément d'entraînement (24), le ressort à fil (47) étant adapté de façon à être pressé hors de ladite rainure interne (48) s'étendant autour des moyens formant embrayage (25) lorsque les moyens formant embrayage (25) viennent dans la position de prise.

9. Système pneumatique selon la revendication 1, dans lequel le compresseur (1) est un compresseur à piston et comprend une tête de cylindre (7), **caractérisé en ce que** la tête de cylindre (7) du compresseur (1) peut être reliée à l'environnement par l'intermédiaire d'une ligne pneumatique (71) et d'un agencement de vanne (70), cet agencement de vanne (70) comprenant des moyens formant vanne (72) qui sont adaptés :
- de façon à être dans une position ouverte et à permettre ainsi à de l'air comprimé de s'écouler vers l'extérieur à partir de la tête de cylindre (7), vers l'environnement, par l'intermédiaire de la ligne pneumatique (71) lorsque les moyens formant embrayage (25) sont dans la position de désengagement, et
- de façon à être dans une position fermée et à empêcher ainsi l'air comprimé de s'écouler vers l'extérieur à partir de la tête de cylindre (7), vers l'environnement, par l'intermédiaire de la ligne pneumatique (71) lorsque les moyens formant embrayage (25) sont dans la position de prise.

10. Système pneumatique selon la revendication 9, **caractérisé en ce que** l'agencement de vanne (70) est disposé dans le boîtier d'embrayage (21) et comprend des moyens de régulation (73) agencés pour un mouvement par rapport au boîtier d'embrayage et pour une coopération avec les moyens formant vanne (72) et une commande (74) des moyens formant piston (50) de façon à réguler la position des moyens formant vanne (72) en fonction de la position linéaire axiale des moyens formant piston.

11. Système pneumatique selon la revendication 10, **caractérisé en ce que** la commande (74) comprend une surface de commande axialement en pente externe (75) des moyens formant piston (50).

12. Système pneumatique selon la revendication 11, **caractérisé en ce que** les moyens de régulation (73) prennent la forme d'une tige qui a sa première extrémité qui bute contre ladite surface de commande (75) et son autre extrémité qui bute contre les moyens formant vanne (72), les moyens de régulation (73), sous l'action de la surface de commande (75), pouvant se déplacer dans leur direction longitudinale vers les moyens formant vanne (72) de façon à commuter les moyens formant vanne de la fermeture à l'ouverture, et, sous l'action des moyens formant vanne (72), pouvant se déplacer dans leur direction longitudinale de façon à s'éloigner des moyens formant vanne, de façon à permettre aux moyens formant vanne d'être commutés de l'ouverture à la fermeture.

13. Système pneumatique selon la revendication 12, **caractérisé en ce que** les moyens formant vanne (72) prennent la forme d'une plaque réalisée en matériau élastique, serrée dans le boîtier d'embrayage (21).
